# EUROPEAN PATENT APPLICATION

(11) **EP 4 462 501 A2**
(43) Date of publication of application: **13.11.2024**
(21) Application number: 24164410.3
(22) Date of filing: 19.03.2024
(51) Int. Cl.: H01M 4/134, H01M 4/38, H01M 4/62, H01M 10/0562, H01M 4/1395, H01M 10/0525

(54) **SLURRY FOR FORMING NEGATIVE ELECTRODE ACTIVE MATERIAL LAYER SLURRY, NEGATIVE ELECTRODE ACTIVE MATERIAL LAYER, AND SOLID-STATE BATTERY**

(30) Priority: 19.04.2023 JP 2023068673
(71) Applicant: TOYOTA JIDOSHA KABUSHIKI KAISHA, Aichi-ken 471-8571 (JP)
(72) Inventor: FURUYA, Ryosuke, Toyota-shi, 471-8571 (JP); YOSHIDA, Jun, Toyota-shi, 471-8571 (JP)
(74) Representative: D Young & Co LLP

(57) **Abstract**

The slurry for forming negative electrode active material layer of the present disclosure contains:
a ketone as a dispersion medium; and
silicon active material particles, sulfide solid electrolyte particles, and single-wall carbon nanotubes, which are dispersed in the ketone, and
a ratio of the single-wall carbon nanotubes with respect to the ketone is 0.15% by mass or lower.

## Description

### FIELD

The present disclosure relates to a slurry for forming negative electrode active material layer, a negative electrode active material layer, and a solid-state battery.

### BACKGROUND

Solid-state batteries are batteries that include a solid electrolyte layer between a positive electrode active material layer and a negative electrode active material layer, and are advantageous in facilitating simplification of a safety device. Among solid-state batteries, solid-state lithium ion batteries have been attracting attention since they utilize a battery reaction involving lithium ion migration and can thereby provide a high energy density.

With regard to such an all-solid-state battery, PTL 1 discloses an all-solid-state battery including: a positive electrode active material layer; a negative electrode active material layer; and a solid electrolyte layer arranged between the positive electrode active material layer and the negative electrode active material layer, in which the negative electrode active material layer contains a Si-based active material, a ratio x of a negative electrode active material layer capacity with respect to a positive electrode active material layer capacity satisfies 2 ≤ x ≤ 2.7, and a filling factor y of the negative electrode active material layer satisfies 21.43x + 14.14 ≤ y ≤ 4.29x + 60.43. In this PTL 1, as a conductive auxiliary agent used in the positive electrode active material layer and the negative electrode active material layer, carbon materials such as acetylene black, Ketjen black, and vapor-grown carbon fibers (VGCFs), as well as metal materials such as nickel, aluminum, and stainless steel are exemplified. Further, in this PTL 1, it is described that the content of the conductive auxiliary agent is, for example, in a range of 0.1% by weight to 10% by weight in the positive electrode and, for example, in a range of 0.1% by weight to 20% by weight in the negative electrode.

### [CITATION LIST]

### [PATENT LITERATURE]

[PTL 1] Japanese Unexamined Patent Publication (Kokai) No. 2022-162396

### SUMMARY

### [TECHNICAL PROBLEM]

As a conductive auxiliary agent used in a positive electrode active material layer and a negative electrode active material layer of a solid-state battery, as described above, carbon materials such as acetylene black, Ketjen black, and vapor-grown carbon fibers (VGCFs), as well as metal materials such as nickel, aluminum, and stainless steel are known. Thereamong, carbon nanotubes represented by vapor-grown carbon fibers (VGCFs) exhibit a favorable conductivity, and therefore have been studied as a strong candidate for a conductive auxiliary agent to be used in a positive electrode active material layer and a negative electrode active material layer of a solid-state battery.

As carbon nanotubes, single-wall carbon nanotubes (SWCNTs) and multi-wall carbon nanotubes (MWCNTs) are known. However, as a conductive auxiliary agent in a positive electrode active material layer and a negative electrode active material layer of a solid-state battery, particularly as a conductive auxiliary agent in a positive electrode active material layer and a negative electrode active material layer of a solid-state battery using sulfide solid electrolyte particles, only multi-wall carbon nanotubes have been studied, while single-wall carbon nanotubes have not been studied. This is because butyl butyrate, which is capable of dispersing sulfide solid electrolyte particles without reacting therewith, is generally used as a dispersion medium for dispersing sulfide solid electrolyte particles to form a slurry for an active material layer, and it is difficult to stably disperse single-wall carbon nanotubes in this butyl butyrate.

In the production of a negative electrode active material layer of a solid-state battery, the resulting negative electrode active material layer needs to be compressed for improvement of interparticle contact. In addition, when a silicon-based active material is used in the negative electrode active material layer of the solid-state battery, the silicon-based active material expands and contracts in association with charging and discharging of the battery. When carbon nanotubes are used in the negative electrode active material layer, there are cases where the carbon nanotubes are deformed and then elastically return back (spring-back) to an original shape in association with compression and subsequent recovery of the negative electrode active material layer during the production, as well as expansion and contraction of the silicon-based active material, consequently facilitating the generation of microcracks in the negative electrode active material layer.

An object of the present disclosure is to inhibit the generation of microcracks while providing good conductivity attributed to carbon nanotubes in an active material layer containing a sulfide solid electrolyte.

### [SOLUTION TO PROBLEM]

The present disclosers conducted intensive studies and discovered that the above-described problems can be solved by the following, thereby completing the present invention.

### <Aspect 1>

A slurry for forming negative electrode active material layer, containing:
a ketone as a dispersion medium; and
silicon active material particles, sulfide solid electrolyte particles, and single-wall carbon nanotubes, which are dispersed in the ketone,
wherein a ratio of the single-wall carbon nanotubes with respect to the ketone is 0.15% by mass or lower.

### <Aspect 2>

The slurry for forming negative electrode active material layer according to Aspect 1, wherein a ratio of the single-wall carbon nanotubes with respect to a total solid content is lower than 0.3% by mass.

### <Aspect 3>

The slurry for forming negative electrode active material layer according to Aspect 1 or 2, wherein the ketone is represented by the following formula: 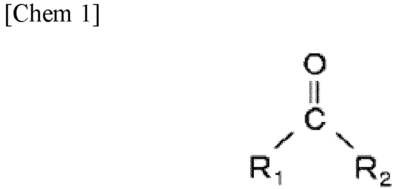 wherein, R₁ and R₂ are each independently selected from the group consisting of an alkyl group having 1 to 5 carbon atoms, a benzyl group, and a phenyl group.

### <Aspect 4>

A negative electrode active material layer, containing:
silicon active material particles;
sulfide solid electrolyte particles; and
single-wall carbon nanotubes,
wherein the content of the single-wall carbon nanotubes is less than 0.3% by mass.

### <Aspect 5>

The negative electrode active material layer according to Aspect 4, wherein the silicon active material particles are porous silicon active material particles, clathrate silicon active material particles, or porous clathrate silicon active material particles.

### <Aspect 6>

A solid-state battery, including the negative electrode active material layer according to Aspect 4 or 5, a solid electrolyte layer, and a positive electrode active material layer in the order mentioned.

### <Aspect 7>

The solid-state battery according to Aspect 6 or 7, wherein, after initial charging and discharging, the number of planar cracks having a length of 10 µm or more is less than 1 on average in regions of 50 µm in thickness direction × 50 µm in width direction at a cross-section of the negative electrode active material layer.

### <Aspect 8>

The solid-state battery according to Aspect 6 or 7, which is a solid-state lithium ion battery.

### [ADVANTAGEIOUS EFFECTS OF INVENTION]

According to the present disclosure, in an active material layer containing a sulfide solid electrolyte, the generation of microcracks can be inhibited while providing good conductivity attributed to carbon nanotubes.

### BRIEF DESCRIPTION OF DRAWING

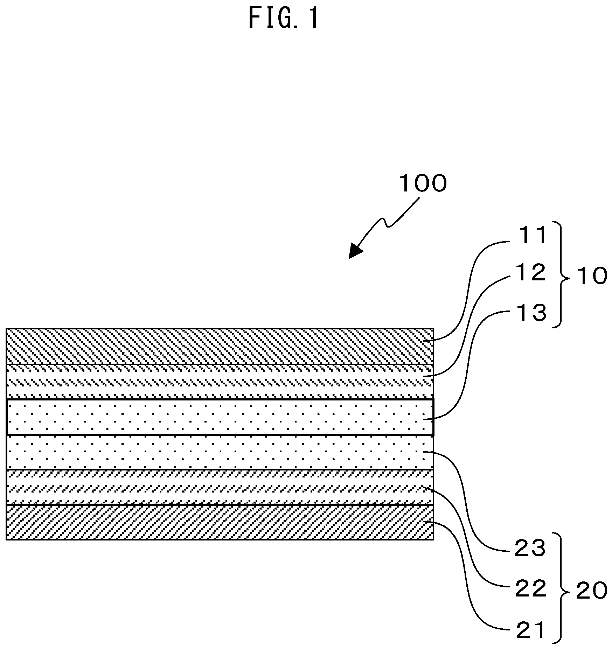

FIG. 1 is a cross-sectional view illustrating one example of the solid-state battery of the present disclosure.

### DESCRIPTION OF EMBODIMENTS

### «Slurry for Forming Negative Electrode Active Material Layer and Negative Electrode Active Material Layer»

The slurry for forming negative electrode active material layer of the present disclosure contains:
a ketone as a dispersion medium; and
silicon active material particles, sulfide solid electrolyte particles, and single-wall carbon nanotubes, which are dispersed in the ketone, and
a ratio of the single-wall carbon nanotubes with respect to the ketone is 0.15% by mass or lower.

In the slurry for forming negative electrode active material layer of the present disclosure, a ratio of the single-wall carbon nanotubes with respect to a total solid content may be lower than 0.3% by mass.

The negative electrode active material layer of the present disclosure contains: Si-based active material particles; sulfide solid electrolyte particles; and single-wall carbon nanotubes, and
the content of the single-wall carbon nanotubes is less than 0.3% by mass.

The present disclosers arrived at the slurry for forming negative electrode active material layer of the present disclosure as a result of discovering that: a ketone used as a dispersion medium can disperse sulfide solid electrolyte particles without reacting therewith; the ketone can stably disperse single-wall carbon nanotubes as long as the amount thereof is small; and a small amount of single-wall carbon nanotubes can provide a good conductivity while inhibiting the generation of microcracks in a negative electrode active material layer. The negative electrode active material layer of the present disclosure can be produced by applying the slurry for forming negative electrode active material layer of the present disclosure to a substrate, such as a negative electrode current collector layer.

Without being bound to any theory, the reason why a small amount of single-wall carbon nanotubes can provide a good conductivity while inhibiting the generation of microcracks in a negative electrode active material layer is believed to be because, since single-wall carbon nanotubes are flexible and the amount thereof is small, the single-wall carbon nanotubes have a small force of elastically returning back to an original shape, and exert a high conductivity-imparting effect per weight of the single-wall carbon nanotubes.

On the other hand, multi-wall carbon nanotubes that are generally used in solid-state batteries have a strong force of elastically returning back to an original shape after being deformed, and exhibit a smaller conductivity-imparting effect per weight than single-wall carbon nanotubes; therefore, multi-wall carbon nanotubes need to be used in a relatively large amount, and this is believed to facilitate the generation of microcracks in a negative electrode active material layer.

The constitution of the slurry for forming negative electrode active material layer of the present disclosure and that of the negative electrode active material layer of the present disclosure will now each be described.

### (Ketone)

The slurry for forming negative electrode active material layer of the present disclosure contains a ketone as a dispersion medium. Unexpectedly, the ketone contained as a dispersion medium not only can disperse sulfide solid electrolyte particles without reacting therewith, but also can stably disperse single-wall carbon nanotubes as long as the amount thereof is small.

A ketone that can be used in the slurry for forming negative electrode active material layer of the present disclosure may have the following formula.

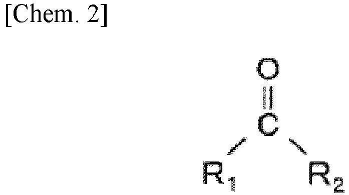

In this formula, R₁ and R₂ may be each independently selected from the group consisting of an alkyl group having 1 to 5 carbon atoms, a benzyl group, and a phenyl group. R₁ and R₂ are preferably selected within a range that the resulting ketone is liquid at normal temperature (25°C).

Specifically, the ketone can be selected from, for example, the group consisting of methyl isobutyl ketone, diisobutyl ketone, 5-nonanone, ethyl isobutyl ketone, benzyl isopropyl ketone, butyrophenone, and a combination thereof.

### (Silicon Active Material Particles)

The slurry for forming negative electrode active material layer of the present disclosure and the negative electrode active material layer of the present disclosure contain silicon active material particles as a negative electrode active material.

The size of the silicon active material particles is not particularly limited. The median diameter (D50 particle size) of porous silicon active material particles may be, for example, 0.1 µm or more, 0.3 µm or more, or 0.5 µm or more, but 50.0 µm or less, 30.0 µm or less, 10.0 µm or less, 5.0 µm or less, 3.0 µm or less, or 1.0 µm or less. It is noted here that the median diameter of the porous silicon active material particles is a particle size (D50 diameter) at a cumulative value of 50% in a volume-based particle size distribution determined by a laser diffraction-scattering method.

As the silicon active material particles, any silicon active material particles can be used. Therefore, as the silicon active material particles, solid silicon active material particles or porous silicon active material particles can be used. Further, as the silicon active material particles, amorphous silicon active material particles or clathrate silicon active material particles can be used.

The porous silicon active material particles have pores inside primary particles, and these pores enable to inhibit the expansion and contraction of negative electrode active material particles during charging and discharging.

In this respect, for example, in the porous silicon active material particles, the amount of pores having a pore diameter of 100 nm or less may be 0.01 cc/g or more, 0.05 cc/g or more, or 0.10 cc/g or more, and 0.50 cc/g or less, 0.40 cc/g or less, 0.30 cc/g or less, 0.20 cc/g or less, 0.15 cc/g or less, or 0.10 cc/g or less. The amount of pores having a pore diameter of 100 nm or less is a cumulative pore volume of pores having a pore diameter of 100 nm or less. This cumulative pore volume can be determined by, for example, mercury porosimetry.

The porous silicon active material particles can be produced by any method. Specifically, the porous silicon active material particles can be produced by a known method. For example, the porous silicon active material particles can be produced by forming alloy particles of silicon and other metal such as magnesium or lithium, and subsequently removing the other metal from the alloy particles by elution.

The porous silicon active material particles may be porous clathrate silicon active material particles having a clathrate structure. The porous silicon active material particles preferably have a clathrate structure since this further reduces the expansion and contraction of the porous silicon active material particles caused by charging and discharging of a battery. Whether or not the porous silicon active material particles have a clathrate structure can be easily judged based on a Raman spectrum, an XRD, or the like. The porous silicon active material particles may have an oxide coating film, and may contain impurities such as carbon.

The porous clathrate silicon active material particles can be obtained by any known method in which, for example, the above-described porous silicon active material particles and a sodium source, such as NaH, are mixed, and the resultant is subsequently heat-treated in a non-oxidizing atmosphere to remove sodium.

### (Sulfide Solid Electrolyte Particles)

The slurry for forming negative electrode active material layer of the present disclosure and the negative electrode active material layer of the present disclosure contain sulfide solid electrolyte particles as a solid electrolyte.

As the sulfide solid electrolyte particles, any sulfide solid electrolyte particles can be used. Specific examples of the sulfide solid electrolyte particles include particles of Li₂S-P₂S₅, Li₂S-SiS₂, LiI-Li₂S-SiS₂, LiI-Si₂S-P₂S₅, Li₂S-P₂S₅-LiI-LiBr, LiI-Li₂S-P₂S₅, LiI-Li₂S-P₂O₅, LiI-Li₃PO₄-P₂S₅, Li₂S-P₂S₅-GeS₂, and the like. Particularly, among these sulfide solid electrolyte particles, ones containing at least Li, S, and P as constituent elements have high performance and are thus preferred. Sulfide solid electrolyte particles may be amorphous or crystalline. Such sulfide solid electrolyte particles may be used singly, or in combination of two or more kinds thereof.

### (Single-Wall Carbon Nanotubes)

The slurry for forming negative electrode active material layer of the present disclosure and the negative electrode active material layer of the present disclosure contain single-wall carbon nanotubes as a conductive auxiliary agent.

In the slurry for forming negative electrode active material layer of the present disclosure, the ratio of the single-wall carbon nanotubes with respect to the ketone contained as a dispersion medium may be 0.01% by mass or higher, 0.02% by mass or higher, or 0.03% by mass or higher, but 0.15% by mass or lower, 0.12% by mass or lower, 0.11% by mass or lower, 0.10% by mass or lower, 0.09% by mass or lower, 0.08% by mass or lower, 0.07% by mass or lower, or 0.06% by mass or lower.

The ratio of the single-wall carbon nanotubes with respect to a total solid content in the slurry for forming negative electrode active material layer of the present disclosure and the ratio of the single-wall carbon nanotubes in the negative electrode active material layer of the present disclosure contain may each be 0.01% by mass or higher, 0.02% by mass or higher, 0.04% by mass or higher, 0.06% by mass or higher, 0.08% by mass or higher, or 0.10% by mass or higher, but lower than 0.30% by mass, 0.28% by mass or lower, 0.26% by mass or lower, 0.24% by mass or lower, 0.22% by mass or lower, or 0.20% by mass or lower.

As the single-wall carbon nanotubes, any single-wall carbon nanotubes can be used. It is noted here that, while multi-wall carbon nanotubes are each constituted by plural graphene sheets, single-wall carbon nanotubes are each constituted by a single graphene sheet. Single-wall carbon nanotubes are classified into a chiral (helical) type, a zigzag type, and an armchair type, based on a difference in the graphene sheet structure. As the single-wall carbon nanotubes in the present disclosure, any of the above-described single-wall carbon nanotubes can be used, and a single kind or a mixture of plural kinds of single-wall carbon nanotubes can be used.

The diameter (fiber diameter) of the single-wall carbon nanotubes is not particularly limited, and the average diameter may be, for example, 0.4 nm or more, 0.5 nm or more, or 1.0 nm or more, but 100.0 nm or less, 50.0 nm or less, 10.0 nm or less, or 5.0 nm or less. The length of the single-wall carbon nanotubes is not particularly limited, and the average length may be, for example, 0.1 µm or more, 0.5 µm or more, 1.0 µm or more, or 5.0 µm or more, and 1,000 µm or less, 500 µm or less, 100 µm or less, or 50 µm or less. The aspect ratio (a ratio of the average length with respect to the average diameter) of the single-wall carbon nanotubes is also not particularly limited and may be, for example, 10 or higher, 100 or higher, 500 or higher, or 1,000 or higher.

The average diameter and the average length of the single-wall carbon nanotubes can be determined by measuring the dimensions of randomly selected 50 or more single-wall carbon nanotubes under a scanning electron microscope (SEM), a transmission electron microscope (TEM) or the like, and taking an arithmetic mean of the thus measured values.

When multi-wall carbon nanotubes are used in combination with the single-wall carbon nanotubes, the mass ratio of the single-wall carbon nanotubes in all carbon nanotubes may be, for example, 1% by mass or higher, 3% by mass or higher, 5% by mass or higher, 10% by mass or higher, 20% by mass or higher, 30% by mass or higher, 40% by mass or higher, 50% by mass or higher, 60% by mass or higher, 70% by mass or higher, 80% by mass or higher, 90% by mass or higher, 95% by mass or higher, or 99% by mass or higher. Preferably, as carbon nanotubes, the single-wall carbon nanotubes can be used alone.

A conductive agent other than the carbon nanotubes is not particularly limited and, for example, carbon black such as acetylene black or Ketjen black can be used.

### <<Solid-State Battery>>

The solid-state battery of the present disclosure includes the negative electrode active material layer of the present disclosure, a solid electrolyte layer, and a positive electrode active material layer in the order mentioned. The solid-state battery of the present disclosure is preferably a solid-state lithium ion battery.

In the solid-state battery of the present disclosure, after initial charging and discharging thereof, the number of planar cracks having a length of 10 µm or more may be less than 1 on average in regions of 50 µm in thickness direction × 50 µm in width direction at a cross-section of the negative electrode active material layer. It is noted here that the number of planar cracks may be observed for three fields of view, and may be an average of the three fields of view. The planar cracks can be verified by judging laterally elongated voids having a width of 2 µm or more in the lamination direction of the solid-state battery and an aspect ratio of 5 or higher as cracks.

The term "width direction" used herein refers to a direction perpendicular to the thickness direction at a cross-section of the negative electrode active material layer.

Further, the term "after initial charging and discharging" used herein refers to a point after a produced solid-state battery is constant-current constant-voltage charged (CCCV-charged) to 4.35 V at 1/10 C and then CCCV-discharged to 3.35 V at 1/3 C.

The solid-state battery of the present disclosure may include a negative electrode current collector layer on the side of the negative electrode active material layer opposite from the solid electrolyte layer, and may also include a positive electrode current collector layer on the side of the positive electrode active material layer opposite from the solid electrolyte layer. In other words, the solid-state battery of the present disclosure may include the negative electrode current collector layer, the negative electrode active material layer, the solid electrolyte layer, the positive electrode active material layer, and the positive electrode current collector layer in the order mentioned.

### <Negative Electrode Current Collector Layer>

A negative electrode layer used in the solid-state battery of the present disclosure may be provided with a negative electrode current collector layer that is in contact with the negative electrode active material layer. As the negative electrode current collector layer, any current collector layer that is generally used as a negative electrode current collector layer of a battery can be employed. The negative electrode current collector layer may be in the form of, for example, a foil, a plate, a mesh, a punched metal, a porous body, or a foam. The negative electrode current collector layer may be a metal foil, a metal mesh, or a carbon sheet. Particularly, a metal foil is excellent in terms of the ease of handling and the like. The negative electrode current collector layer may be composed of plural foils or sheets. Examples of a metal constituting the negative electrode current collector layer include Cu, Ni, Cr, Au, Pt, Ag, Al, Fe, Ti, Zn, Co, and stainless steel. Particularly, from the standpoint of ensuring a reduction resistance and the standpoint of making alloy formation with lithium difficult, the negative electrode current collector layer may contain at least one metal selected from Cu, Ni, and stainless steel.

### <Solid Electrolyte Layer>

The solid electrolyte layer may contain a solid electrolyte.

A material of the solid electrolyte is not particularly limited, and any material that can be utilized as a solid electrolyte in a lithium ion battery may be used. For example, the solid electrolyte may be, but not limited to, any of a sulfide solid electrolyte, an oxide solid electrolyte, and a polymer electrolyte. These solid electrolytes may be used singly, or in combination of two or more kinds thereof.

As the sulfide solid electrolyte, for example, the sulfide solid electrolyte particles exemplified above in relation to the negative electrode active material layer can be used.

Examples of the oxide solid electrolyte include, but not limited to, Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, and Li₃₊ₓPO₄₋ₓNₓ (LiPON). These oxide solid electrolytes may be amorphous or crystalline.

Examples of the polymer electrolyte include, but not limited to, polyethylene oxide (PEO), polypropylene oxide (PPO), and copolymers thereof.

### <Positive Electrode Active Material Layer>

The positive electrode active material layer used in the solid-state battery of the present disclosure contains a positive electrode active material and, as desired, may further contain an electrolyte, a conductive auxiliary agent, a binder, and the like. In addition, the positive electrode active material layer may contain other various additives. In the positive electrode active material layer, the content of each of the positive electrode active material, the electrolyte, the conductive auxiliary agent, the binder, and the like may be determined as appropriate in accordance with the target battery performance.

As the positive electrode active material, any known positive electrode active material, particularly one used in lithium ion batteries can be used, and the positive electrode active material can be selected from, for example: metal oxides containing lithium and at least one transition metal selected from manganese, cobalt, nickel, and titanium; heteroelement-substituted Li-Mn spinels such as lithium cobaltate, lithium nickelate, lithium manganate, or nickel cobalt lithium manganate (NCM); lithium titanate; lithium metal phosphate; and combinations thereof.

The electrolyte optionally contained in the positive electrode active material layer may be a solid electrolyte, a liquid electrolyte (an electrolyte solution), or a combination thereof.

### <Positive Electrode Current Collector Layer>

As the positive electrode current collector layer used in the solid-state battery of the present disclosure, any current collector layer that is generally used as a positive electrode current collector layer of a secondary battery can be employed. The positive electrode current collector layer may be in the form of, for example, a foil, a plate, a mesh, a punched metal, a porous body, or a foam. The positive electrode current collector layer may be a metal foil or a metal mesh. Particularly, a metal foil is excellent in terms of the ease of handling and the like. The positive electrode current collector layer may be composed of plural metal foils. Examples of a metal constituting the positive electrode current collector layer include Cu, Ni, Cr, Au, Pt, Ag, Al, Fe, Ti, Zn, Co, and stainless steel.

### EXAMPLES

### <<Example 1»

### <Production of Solid-State Battery>

A solid-state battery of Example 1 was produced in the following manner.

### (Production of Negative Electrode Active Material Layer)

To diisobutyl ketone (2.7 g) serving as a dispersion medium, single-wall carbon nanotubes (SWCNTs) (0.002 g), a silicon active material (1.0 g), a sulfide solid electrolyte (1.2 g), and a 5%-by-mass diisobutyl ketone solution of a polyvinylidene fluoride-hexafluoropropylene copolymer (PVDF-HFP) (0.8 g (PVDF-HFP: 0.04 g, diisobutyl ketone: 0.76 g)) were added, and the resultant was dispersion-treated with an ultrasonic wave having an amplitude of 40 µm and a frequency of 20 kHz over a period of 10 minutes to obtain a slurry for forming negative electrode active material layer. The single-wall carbon nanotubes (SWCNTs) used here had an average fiber diameter of less than about 10 nm and an average fiber length of about 5 µm.

The content ratio of the single-wall carbon nanotubes with respect to the dispersion medium (isobutyl ketone) was 0.0578% by mass (0.002 g/(2.7 g + 0.8 g × 0.95)). The ratio of the single-wall carbon nanotubes with respect to a total solid content was less than 0.3% by mass (0.002 g/(2.7 g + 0.002 g + 1.0 g + 0.8 g × 0.05)). As the sulfide solid electrolyte, Li₂S-P₂S₅ glass ceramic was used.

The silicon active material was a porous silicon (porous Si) produced in the following manner. Specifically, as a Si source, Si powder (Si powder having no void inside a primary particle) was prepared. This Si source and Li metal were weighed at a molar ratio of Li/Si = 4.0, and mixed using a mortar in an Ar atmosphere to obtain an alloy compound. The thus obtained alloy compound was allowed to react with ethanol in an Ar atmosphere to obtain a porous silicon having voids inside a primary particle, i.e. a porous structure.

The slurry for forming negative electrode active material layer obtained in the above-described manner was applied to a surface-roughened nickel foil serving as a negative electrode current collector layer using blades having a gap of 100 µm, whereby a negative electrode active material layer was obtained.

### (Production of Solid Electrolyte Layer)

To heptane (0.8 g) serving as a dispersion medium, the above-described sulfide solid electrolyte (0.4 g) and a 5%-by-mass heptane solution (0.05 g) of an acrylonitrile-butadiene rubber (ABR) were added, and the resultant was dispersion-treated with an ultrasonic wave having an amplitude of 40 µm and a frequency of 20 kHz over a period of 10 minutes to obtain a slurry for forming solid electrolyte layer. The thus obtained slurry for forming solid electrolyte layer was applied to a stainless steel foil for transfer using blades having a gap of 50 µm, whereby a solid electrolyte layer was obtained.

### (Production of Positive Electrode Active Material Layer)

To butyl butyrate (1 g) serving as a dispersion medium, NCM (2 g), VGCF-H (0.03 g), the sulfide solid electrolyte (0.3 g), a 5%-by-mass butyl butyrate solution (0.3 g) of a polyvinylidene fluoride-hexafluoropropylene (PVDF-HFP) copolymer were added, and the resultant was dispersion-treated with an ultrasonic wave having an amplitude of 40 µm and a frequency of 20 kHz over a period of 10 minutes to obtain a slurry for forming positive electrode active material layer. The thus obtained slurry for forming positive electrode active material layer was applied to an aluminum foil serving as a positive electrode current collector layer using blades having a gap of 100 µm, whereby a positive electrode active material layer was obtained.

### (Production of Solid-State Battery)

The solid electrolyte layer was disposed on the negative electrode active material layer, and the resultant was roll-pressed with a linear pressure of 3 t/cm at room temperature to obtain a negative electrode laminate 20 having a negative electrode current collector layer 21, a negative electrode active material layer 22, and a solid electrolyte layer 23 in the order mentioned. Further, the solid electrolyte layer was disposed on the positive electrode active material layer, and the resultant was roll-pressed with a linear pressure of 4 t/cm at 170°C to obtain a positive electrode laminate 10 having a positive electrode current collector layer 11, a positive electrode active material layer 12, and a solid electrolyte layer 13 in the order mentioned. The thus obtained laminates were each punched out into a circular piece of 1 cm², and the solid electrolyte layer 23 of the negative electrode laminate 20 and the solid electrolyte layer 13 of the positive electrode laminate 10 were superimposed and bonded together to obtain a solid-state battery 100 having a laminate of the negative electrode current collector layer 21, the negative electrode active material layer 22, the solid electrolyte layer 23, the solid electrolyte layer 13, the positive electrode active material layer 12, and the positive electrode current collector layer 11. In other words, the thus obtained battery laminate had such a laminated configuration as illustrated in FIG. 1.

### <Evaluation>

The solid-state battery of Example 1 obtained in the above-described manner was evaluated as follows. The evaluation results are shown in Table 1.

### (Dispersibility of Slurry for Forming Negative Electrode Active Material Layer)

The dispersibility of the slurry for forming negative electrode active material layer was evaluated. Specifically, whether or not the slurry for forming negative electrode active material layer was uniformly dispersible was evaluated.

### (Internal Resistance)

The thus produced solid-state battery was constant-current constant-voltage charged (CCCV-charged) to 4.35 V at 1/10 C and then CCCV-discharged to 3.35 V at 1/3 C. Subsequently, the solid-state battery was further CCCV-charged to 4.35 V at 1/10 C and, while CCCV-charging this battery to 3.35 V at 1/3 C, 7 C discharging of the battery was performed at a charging rate of 70% (SOC70%) and a charging rate of 30% (SOC30%), and the internal resistance was calculated from the voltage change in 10 seconds and the current value.

### (Number of Cracks and Porosity)

After the internal resistance was measured in the above-described manner, the number of cracks in the negative electrode active material layer was evaluated. Specifically, after the internal resistance was measured in the above-described manner, the solid-state battery was cut in the lamination direction, and the resulting cut cross-section was observed under an FE-SEM at a magnification of ×2,000 to count the number of cracks in a range of 40 µm in the lamination direction (thickness direction) × 60 µm in the width direction of the solid state battery. Three fields of view were observed for each sample, and an average of the three fields of view was taken as the number of cracks. It is noted here that a laterally elongated void having a width of 2 µm or more in the lamination direction of the solid-state battery and an aspect ratio of 5 or higher was judged as a crack. A continuous crack was counted as a single crack regardless of its length. In the same manner, three fields of view were observed for each sample to calculate the porosity of the negative electrode active material layer.

### <<Examples 2 and 3 and Comparative Examples 1 to 6»

Solid-state batteries of Examples 2 and 3 and Comparative Examples 1 to 6 were obtained and evaluated in the same manner as in Example 1, except that the negative electrode active material, the dispersion medium, and the conductive auxiliary agent were changed as shown in Table 1 below. It is noted here that the multi-wall carbon nanotubes (MWCNTs) used here had an average fiber diameter of about 150 nm and an average fiber length of about 6 µm.

In Table 1, "MWCNTs" denote multi-wall carbon nanotubes having an average fiber diameter of about 150 nm and an average fiber length of about 6 µm.

Further, "porous clathrate Si" denotes a porous clathrate silicon produced in the following manner. Specifically, a NaSi alloy was produced using a powder of the above-described porous silicon and NaH serving as a Na source. As this NaH, NaH washed with hexane in advance was used. The Na source and the Si source were weighed at a molar ratio of 1.05:1.00 and mixed using a cutter mill. The resulting mixture was heated in a heating furnace in an Ar atmosphere at 400°C for 40 hours to obtain a powder-form NaSi alloy.

The thus obtained NaSi alloy was heated in an Ar atmosphere at a heating temperature of 270°C for a heating time of 120 hours to remove Na, whereby a porous clathrate silicon having a clathrate type-II crystal phase was obtained.

The summary and evaluation results of Examples and Comparative Examples are shown in Tables 1 and 2 below.

### [Table 1]

**Table 1**

| | Negative electrode active material | | Dispersion medium | | Conductive auxiliary agent (carbon nanotubes (CNTs)) | | Solid electrolyte | | Binder composition | | | | Ratio of CNTs with respect to dispersion medium (% by mass) | Ratio of CNTs with respect to total solid content (% by mass) |
|---|---|---|---|---|---|---|---|---|---|---|---|---|---|---|
| | | | | | | | | | Solid content | | Solvent | | | |
| | Type | Amount (g) | Type | Amount (g) | Type | Amount (g) | Type | Amount (g) | Type | Amount (g) | Type | Amount (g) | | |
| Example 1 | porous Si | 1.0 | diisobutyl ketone | 2.7 | SWCNTs | 0.002 | sulfide | 1.2 | PVDF-HFP | 0.04 | diisobutyl ketone | 0.76 | 0.058 | 0.089 |
| Example 2 | porous Si | 1.0 | diisobutyl ketone | 2.7 | SWCNTs | 0.004 | sulfide | 1.2 | PVDF-HFP | 0.04 | diisobutyl ketone | 0.76 | 0.116 | 0.178 |
| Comparative Example 1 | porous Si | 1.0 | diisobutyl ketone | 2.7 | SWCNTs | 0.007 | sulfide | 1.2 | PVDF-HFP | 0.04 | diisobutyl ketone | 0.76 | 0.202 | 0.312 |
| Comparative Example 2 | porous Si | 1.0 | diisobutyl ketone | 2.7 | MWCNTs | 0.330 | sulfide | 1.2 | PVDF-HFP | 0.04 | diisobutyl ketone | 0.76 | 9.538 | 12.84 |
| Comparative Example 3 | porous Si | 1.0 | diisobutyl ketone | 2.7 | MWCNTs | 0.004 | sulfide | 1.2 | PVDF-HFP | 0.04 | diisobutyl ketone | 0.76 | 0.116 | 0.178 |
| Comparative Example 4 | porous Si | 1.0 | diisobutyl ketone | 2.7 | - | 0.000 | sulfide | 1.2 | PVDF-HFP | 0.04 | diisobutyl ketone, | 0.76 | 0 | 0 |
| Comparative Example 5 | porous Si | 1.0 | butyl butyrate | 2.7 | SWCNTs | 0.002 | sulfide | 1.2 | PVDF-HFP | 0.04 | butyl butyrate | 0.76 | 0.058 | 0.089 |
| Example 3 | porous clathrate Si | 1.0 | diisobutyl ketone | 2.7 | SWCNTs | 0.004 | sulfide | 1.2 | PVDF-HFP | 0.04 | diisobutyl ketone | 0.76 | 0.116 | 0.178 |
| Comparative Example 6 | porous clathrate Si | 1.0 | diisobutyl ketone | 2.7 | MWCNTs | 0.330 | sulfide | 1.2 | PVDF-HFP | 0.04 | diisobutyl ketone | 0.76 | 9.538 | 12.84 |

### [Table 2]

**Table 2**

| | Negative electrode active material | Dispersion medium | Conductive auxiliary agent (carbon nanotubes (CNTs)) | | | Dispersibility of slurry for forming negative electrode active material layer | Internal resistance (Ω·cm² ) | | Number of cracks in negative electrode active material layer (-) | Porosity of negative electrode active material layer (%) |
|---|---|---|---|---|---|---|---|---|---|---|
| | Type | Type | Type | Ratio of CNTs with dispersion medium (% by mass) | Ratio of CNTs with respect to total content solid (% by mass) | | SOC70% | SOC30% | | |
| Example 1 | porous Si | diisobutyl ketone | SWCNTs | 0.058 | 0.089 | good | 52 | 89 | 0 | 2.23 |
| Example 2 | porous Si | diisobutyl ketone | SWCNTs | 0.116 | 0.178 | good | 54 | 78 | 0 | 1.17 |
| Comparative Example 1 | porous Si | diisobutyl ketone | SWCNTs | 0.202 | 0.267 | poor | - | - | - | - |
| Comparative Example 2 | porous Si | diisobutyl ketone | MWCNTs | 9.538 | 12.84 | good | 45 | 96 | 7 | 4.51 |
| Comparative Example 3 | porous Si | diisobutyl ketone | MWCNTs | 0.116 | 0.178 | good | 69 | 110 | 0 | 2.05 |
| Comparative Example 4 | porous Si | diisobutyl ketone | - | 0 | 0 | good | 76 | 114 | 0 | 1.48 |
| Comparative Example 5 | porous Si | butyl butyrate | SWCNTs | 0.058 | 0.089 | poor | - | - | - | - |
| Example 3 | porous clathrate Si | diisobutyl ketone | SWCNTs | 0.116 | 0.178 | good | 41 | 114 | 0 | 1.77 |
| Comparative Example 6 | porous clathrate Si | diisobutyl ketone | MWCNTs | 9.538 | 12.84 | good | 43 | 170 | 9 | 5.25 |

As shown in Table 1, in Examples 1 to 3 where single-wall carbon nanotubes were used as a conductive auxiliary agent in an amount of less than 0.3% by mass with respect to a total solid content, the slurry for forming negative electrode active material layer was dispersible. In addition, the solid-state batteries of Examples 1 to 3 had a low internal resistance in a state where the charging rate was 30% (SOC30%), i.e. in a relatively discharged state. Further, in the solid-state batteries of Examples 1 to 3, the number of cracks in the negative electrode active material layer was small, and the negative electrode active material layer had a low porosity.

With regard to the number of cracks, in this evaluation, cracks were counted within a range of 40 µm in thickness direction × 60 µm in width direction. This range is smaller than a region of 50 µm in thickness direction × 50 µm in width direction; however, the number of cracks in the negative electrode active material layers of the solid-state batteries of Examples 1 to 3 was less than 1 on average even when converted into a region of 50 µm in thickness direction × 50 µm in width direction.

Moreover, for the sake of convenience in the evaluation, cracks were counted after the initial charging and discharging and the subsequent charging and discharging that were performed for the measurement of the internal resistance; however, even when cracks were counted immediately after the initial charging and discharging, the number of cracks in the negative electrode active material layers of the solid-state batteries of Examples 1 to 3 was less than 1 on average.

### REFERENCE SIGNS LIST

10: positive electrode laminate
11: positive electrode current collector layer
12: positive electrode active material layer
13, 23: solid electrolyte layer
20: negative electrode laminate
21: negative electrode current collector layer
22: negative electrode active material layer
100: solid-state battery

## Claims

1. A slurry for forming negative electrode active material layer, containing:
a ketone as a dispersion medium; and
silicon active material particles, sulfide solid electrolyte particles, and single-wall carbon nanotubes, which are dispersed in the ketone,
wherein a ratio of the single-wall carbon nanotubes with respect to the ketone is 0.15% by mass or lower.

2. The slurry for forming negative electrode active material layer according to Claim 1, wherein a ratio of the single-wall carbon nanotubes with respect to a total solid content is lower than 0.3% by mass.

3. The slurry for forming negative electrode active material layer according to Claim 1 or 2, wherein the ketone is represented by the following formula: 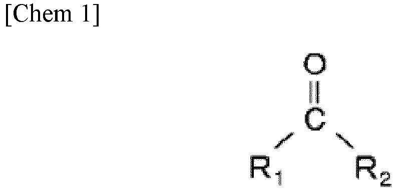 wherein, R₁ and R₂ are each independently selected from the group consisting of an alkyl group having 1 to 5 carbon atoms, a benzyl group, and a phenyl group.

4. A negative electrode active material layer, containing:
silicon active material particles;
sulfide solid electrolyte particles; and
single-wall carbon nanotubes,
wherein the content of the single-wall carbon nanotubes is less than 0.3% by mass.

5. The negative electrode active material layer according to Claim 4, wherein the silicon active material particles are porous silicon active material particles, clathrate silicon active material particles, or porous clathrate silicon active material particles.

6. A solid-state battery, including the negative electrode active material layer according to Claim 4 or 5, a solid electrolyte layer, and a positive electrode active material layer in the order mentioned.

7. The solid-state battery according to Claim 6 or 7, wherein, after initial charging and discharging, the number of planar cracks having a length of 10 µm or more is less than 1 on average in regions of 50 µm in thickness direction × 50 µm in width direction at a cross-section of the negative electrode active material layer.

8. The solid-state battery according to Claim 6 or 7, which is a solid-state lithium ion battery.
